# EUROPÄISCHE PATENTSCHRIFT

(11) **EP 2 285 626 B1**
(45) Veröffentlichungstag und Bekanntmachung des Hinweises auf die Patenterteilung: **16.12.2015**
(21) Anmeldenummer: 09753616.3
(22) Anmeldetag: 13.05.2009
(51) Int. Cl.: B60R 11/02, H04M 1/725, H04M 1/60, H04B 1/20

(54) **KOMMUNIKATIONSSYSTEM UND VERFAHREN ZUM KOMMUNIZIEREN ZWISCHEN KOMMUNIKATIONSEINRICHTUNGEN UND ZUMINDEST EINEM NUTZER EINES KOMMUNIKATIONSSYSTEMS**
COMMUNICATIONS SYSTEM AND METHOD FOR COMMUNICATING BETWEEN COMMUNICATIONS DEVICES AND AT LEAST ONE USER OF A COMMUNICATIONS SYSTEM
SYSTÈME DE COMMUNICATION ET PROCÉDÉ DE COMMUNICATION ENTRE DES DISPOSITIFS DE COMMUNICATION ET AU MOINS UN UTILISATEUR D UN SYSTÈME DE COMMUNICATION

(30) Priorität: 28.05.2008 DE 102008025531
(43) Veröffentlichungstag der Anmeldung: 23.02.2011
(73) Patentinhaber: Audi AG, 85045 Ingolstadt (DE)
(72) Erfinder: SELLSCHOPP, Stefan, 85221 Dachau (DE); NICOLESCU, Valentin, 80804 München (DE); KRCMAR, Helmut, 85402 Kranzberg (DE)
(74) Vertreter: Brandt, Kai
(86) Internationale Anmeldenummer: PCT/EP2009/003382
(87) Internationale Veröffentlichungsnummer: WO 2009/143961

(56) Entgegenhaltungen:
- EP-A- 1 123 843
- EP-A- 1 188 617
- EP-A- 1 376 572
- EP-A- 1 981 213
- WO-A-00/72463
- US-A1- 2002 173 273
- US-A1- 2006 129 637
- US-A1- 2007 143 798

## Beschreibung

Die Erfindung betrifft ein Kommunikationssystem mit einer ersten Kommunikationseinrichtung und einer separat dazu ausgebildeten und in einem Fahrzeug angeordneten zweiten Kommunikationseinrichtung. Darüber hinaus betrifft die Erfindung auch ein Verfahren zum Kommunizieren zwischen Kommunikationseinrichtungen und zumindest einem Nutzer eines Kommunikationssystems.

Aus der DE 10 2006 052 898 A1 ist eine Informations- und Bedienvorrichtung für einen Benutzer eines Kraftfahrzeugs bekannt. Die Vorrichtung ist in einem Kraftfahrzeug ortsfest angeordnet und umfasst eine Anzeigeeinheit, auf welcher Informationen dargestellt werden können. Die Informationsdarstellung wird durch einen virtuellen Charakter in Form eines Avatars unterstützt. In diesem Zusammenhang können beispielsweise Bedienungsanleitungen für Komponenten des Fahrzeugs dargestellt werden. Darüber hinaus ist vorgesehen, dass die Informationsdarbietung benutzerspezifisch eingestellt werden kann und abhängig von dieser Einstellung beispielsweise die Information über eine Bedienungsanleitung einer Komponente äußerst knapp, wenn der Nutzer ein Fachmann ist, oder sehr ausführlich, wenn der Nutzer ein Laie ist, präsentiert werden kann.

Darüber hinaus ist aus der DE 10 2005 000 501 A1 ein Verfahren zur Darstellung von Gebrauchsanleitungen bekannt. Dazu kann vorgesehen sein, dass Gebrauchsanleitungen eines Geräts auf ein mobiles Endgerät mit einem Bildschirm geladen werden kann. Die Installation oder die Betriebsweise dieses Geräts, beispielsweise eines DVD-Spielers, wird auf dem Bildschirm des mobilen Endgeräts angezeigt, wobei dazu unterstützend ein Avatar angezeigt werden kann. Dieses virtuelle Wesen kann auf dem Bildschirm auf die jeweiligen Bedienelemente des zu installierenden oder zu betreibenden Geräts zeigen.

Aus der Druckschrift US 2002/0173273 A1 ist ein drahtloses Kommunikationssystem bekannt, bei welchem eine Vielzahl von Abspielgeräten sowohl miteinander als auch über eine Rechenplattform mit einem Hostserver drahtlos kommunizieren können. Die einzelnen Abspielgeräte können beispielsweise auf Audio-Daten zugreifen, die in einem Speicher der Rechenplattform abgelegt sind. Die Rechenplattform kann auch die einzelnen Abspielgeräte ansteuern; sie kann beispielsweise eine Wiedergabeliste eines Abspielgerätes verändern. Eines der Abspielgeräte kann auch in einem Kraftfahrzeug angeordnet sein. Daten mit einer Wiedergabeliste können auch zwischen einzelnen Abspielgeräten übertragen werden. Dabei kann ein Abspielgerät an ein anderes Abspielgerät nicht nur die Wiedergabeliste übertragen, sondern auch Informationen über den aktuellen Zustand bzw. die aktuelle Stelle der Musikwiedergabe.

Das Dokument EP 1 376 572 A1 beschreibt ebenfalls ein drahtloses Kommunikationssystem, bei welchem ein erstes elektronisches Gerät und ein zweites elektronisches Gerät miteinander drahtlos kommunizieren können. Das erste elektronische Gerät kann beispielsweise ein mobiles bzw. tragbares Abspielgerät zur Wiedergabe von Musik sein, während das zweite elektronische Gerät ein fahrzeugfestes bzw. ortsfest im Fahrzeug angeordnetes Abspielgerät ist. Die Kommunikation zwischen den beiden Geräten kann so aussehen, dass eine durch das erste elektronische Gerät vorgenommene Wiedergabe von Informationen - nämlich beispielsweise eine Musikwiedergabe - durch das zweite elektronische Gerät fortgeführt wird. Nähert sich das erste elektronische Gerät dem zweiten, so werden Daten von dem einen Gerät an das andere Gerät übertragen, welche eine Information über den aktuellen Zustand der Informationswiedergabe beinhalten.

Aus der Druckschrift WO 00/72463 A2 ist ebenfalls ein drahtloses Kommunikationssystem bekannt, bei welchem zwei elektronische Geräte untereinander Daten austauschen können, nämlich über eine drahtlose Kommunikationsverbindung. Diese drahtlose Kommunikation zwischen den beiden elektronischen Geräten wird automatisch hergestellt, wenn der Abstand zwischen diesen Geräten einen vorgegebenen Grenzwert unterschreitet.

Aus der nach dem Prioritätstag der vorliegenden Anmeldung veröffentlichten Druckschrift EP 1 981 213 A1 ist ein Kommunikationssystem mit einem mobilen Gerät - z. B. einem mobilen Telefon und einem audiovisuellen Gerät bekannt. Mithilfe des mobilen Gerätes kann der Benutzer das audiovisuelle Gerät steuern. Das mobile Gerät kann Steuersignale an das audiovisuelle Gerät übertragen.

Die Druckschrift US 2006/0129637 A1 beschreibt ein System einschließlich eines ersten und eines zweiten Gerätes. Das erste Gerät kann ein mobiles Gerät sein; das zweite Gerät kann ein in einem Fahrzeug angeordnetes Gerät sein, also ein fahrzeugfestes Gerät. Der Benutzer kann mit dem mobilen Gerät kommunizieren, nämlich mithilfe von Sprachsignalen. Auf dem mobilen Gerät ist ein virtueller Charakter - wie ein Avatar - bereitgestellt, welcher dem Fahrer durch einen bestimmten Bewegungsablauf Informationen vermittelt. Das mobile Gerät kann auch die Sprachesignale des Nutzers verarbeiten, wie auch derartige Sprachsignale erzeugen. Steigt nun der Nutzer in ein Fahrzeug ein, so wird der virtuelle Charakter von dem mobilen Gerät auf das fahrzeugseitige Gerät symbolisch übertragen. Außerdem wird von dem mobilen Gerät an das fahrzeugseitige Gerät ein Computerprogramm übertragen, welches zur Erkennung und Verarbeitung der Sprachsignale des Nutzers dient.

Es ist Aufgabe der vorliegenden Erfindung, ein Kommunikationssystem sowie ein Verfahren zum Kommunizieren zwischen Kommunikationseinrichtungen und zumindest einem Nutzer eines Kommunikationssystems zu schaffen, bei welchem die Flexibilität und variable Nutzbarkeit erhöht werden kann.

Diese Aufgabe wird durch ein Kommunikationssystem, welches die Merkmale nach Anspruch 1 aufweist, und ein Verfahren, welches die Merkmale nach Anspruch 14 aufweist, gelöst.

Ein erfindungsgemäßes Kommunikationssystem umfasst eine erste Kommunikationseinrichtung und eine separat dazu ausgebildete zweite Kommunikationseinrichtung, welche in einem Fahrzeug angeordnet ist. Insbesondere ist diese dort ortsfest angeordnet. Die erste und die zweite Kommunikationseinrichtung sind jeweils zur Kommunikation mit einem Nutzer ausgebildet. Darüber hinaus sind beide Kommunikationseinrichtungen zur Verarbeitung von vom Nutzer erzeugten akustischen Signalen, insbesondere Sprachsignalen, ausgebildet. Insbesondere beide Kommunikationseinrichtungen weisen darüber hinaus jeweils eine Anzeigeeinheit auf, auf welchen Informationen anzeigbar sind. Das Kommunikationssystem mit seinen Kommunikationseinrichtungen ist darüber hinaus so ausgebildet, dass ein bei einer Kommunikation zwischen dem Nutzer und einer der Kommunikationseinrichtungen erreichter und von einem Endzustand einer zu ermittelnden Information unterschiedlicher Zustand der Informationsvermittlung auf die andere Kommunikationseinrichtung übertragbar ist und eine weitere Kommunikation zwischen dem Nutzer und dieser anderen Kommunikationseinrichtung bei dem erreichten Zustand der Informationsübermittlung, der bei der Kommunikation zwischen dem Nutzer und der Kommunikationseinrichtung vorab erreicht wurde, fortsetzbar ist. Es kann somit ein Kommunikationssystem geschaffen werden, welches im Hinblick auf seine flexibel Verwendbarkeit und seine variable Einsetzbarkeit wesentlich verbessert werden kann. Bedarfsabhängig kann somit ein Nutzer mit verschiedensten Kommunikationseinrichtungen kommunizieren und muss diese Kommunikation im Hinblick auf eine Informationsdarbietung nicht zwingend mit dieser Kommunikationseinrichtung, mit der er die Kommunikation begonnen hat, zu Ende führen.

So kann beispielsweise ermöglicht werden, dass dann wenn sich der Nutzer im Fahrzeug befindet und mit der im Fahrzeug angeordneten Kommunikationseinrichtung eine Kommunikation begonnen hat, auch nach dem Verlassen des Fahrzeugs diese Kommunikation fortführen kann. Dies kann dann so vonstatten gehen, dass er den im Fahrzeug erreichten Zustand der Informationsvermittlung zwischen ihm und dem Fahrzeug angeordneten Kommunikationseinrichtung auf die erste Kommunikationseinrichtung übertragen kann und nach dem Verlassen des Fahrzeugs die Kommunikation genau an diesem Zustand mit der ersten Kommunikationseinrichtung an einer beliebigen Stelle außerhalb des Fahrzeugs weiterführen kann. Unter einem Zustand der Informationsvermittlung wird hier insbesondere der zeitliche Vorgang bei der Darbietung von verschiedensten Informationen zu einem Thema verstanden. Ist die gesamte Informationsbasis zu diesem Thema bzw. zum vollständigen Verständnis dieses Themas noch nicht angezeigt bzw. dargeboten, so ist dieser bezeichnete Endzustand der Informationsübermittlung noch nicht erreicht. Erst dann, wenn alle Informationen zu diesem Thema dargeboten sind und somit das Thema von einem Informationsempfänger, insbesondere dem Nutzer, abschließend verständlich empfangen wurden, kann von diesem Endzustand gesprochen werden. Gerade wenn dieser Endzustand eben noch nicht erreicht wurde, kann mit dem vorliegenden Kommunikationssystem auch nach dem Verlassen des Fahrzeugs oder nach dem Beenden der Kommunikation zwischen dem Nutzer und der im Fahrzeug angeordnete Kommunikationseinrichtung diese weitere Informationsdarstellung zur Erreichung des Endzustands der Informationsübermittlung zu einem Thema zwischen dem Nutzer und der anderen Kommunikationseinrichtung, insbesondere der ersten Kommunikationseinrichtung, erfolgen.

Selbstverständlich kann dies jedoch auch in umgekehrter Reihenfolge erfolgen, so dass die Kommunikation zunächst zwischen dem Nutzer und der ersten Kommunikationseinrichtung begonnen wird und dann beim Einsteigen in das Fahrzeug diese Kommunikation zwischen dem Nutzer und der im Fahrzeug angeordneten zweiten Kommunikationseinrichtung fortgesetzt und insbesondere zu Ende geführt wird.

Besonders bevorzugt erweist es sich, wenn die erste Kommunikationseinrichtung ein tragbares Kommunikationsgerät ist. Insbesondere kann hier beispielsweise ein mobiles Endgerät, welches beispielsweise auch zur Durchführung von Telefonaten dient, verwendet werden. Darüber hinaus kann dieses tragbare Kommunikationsgerät beispielsweise jedoch auch ein tragbarer Computer, insbesondere ein Laptop, oder ein Organizer oder dergleichen sein. Die Aufzählung beispielhafter tragbarer Kommunikationsgeräte ist nicht abschließend zu verstehen und kann in vielfältiger Weise ergänzt werden.

Gerade durch die tragbare Ausgestaltung der ersten Kommunikationseinrichtung und somit die mobile Verwendbarkeit, kann das Kommunikationssystem noch flexibler im Hinblick auf die Kommunikationsführung zwischen einem sich an beliebigen Orten befindlichen Nutzer und diesen Kommunikationseinrichtungen ausgestaltet werden. Es kann somit nicht nur ein Zeitverlust im Hinblick auf das Fortführen der Kommunikation vermieden werden, sondern insbesondere dann, wenn die Informationsvermittlung möglichst nahtlos und ohne große zeitliche Pausen erfolgen soll, auch an beliebigen Orten fortgeführt werden. Gerade dann, wenn aufeinander aufbauende Informationen übermittelt werden sollen oder vom Nutzer allesamt verarbeitet und abgespeichert werden sollen, kann dadurch ein Vergessen von bereits erfahrenen Informationen zu Beginn der Kommunikation vermieden werden. Gerade dann, wenn beispielsweise Bedienungsanleitungen oder Ablaufinstruktionen bei einer Kommunikation dargeboten werden, kann somit die zeitnahe Darbietung der gesamten Informationen zu diesem Thema ermöglicht werden. Es kann somit den dargebotenen Informationen stets gefolgt werden und ein Vergessen oder ein Einsteigen an einer bereits erfolgten und vorab dargelegten Stelle von Informationen kann vermieden werden, so dass auch Redundanz bei der Informationsübermittlung verhindert werden kann.

Bevorzugt erweist es sich, wenn zumindest eine, insbesondere beide, Kommunikationseinrichtungen einen virtuellen Charakter bzw. ein virtuelles Wesen, insbesondere einen so genannten Avatar umfassen, welche zur unterstützenden Darstellung und Erläuterung der Informationen auf der Anzeigeeinheit anzeigbar ist. Die Plausibilität von zu präsentierenden Informationen kann dadurch nochmals erhöht werden und die Benutzerfreundlichkeit gesteigert werden. Gerade durch derartige bildhafte Darstellung von Informationen, welche unterstützend durch einen derartigen Avatar angezeigt werden, ist die intuitive Aufnahme der Informationen oftmals verbessert und die Eingängigkeit und Nachvollziehbarkeit der Informationsdarstellung kann erhöht werden.

Interaktive Dialogsysteme im Fahrzeug, die durch anthropomorphe Avatare verkörpert werden, begleiten den Fahrer eines Fahrzeugs über einen längeren Zeitraum, so dass Dialoge und Belehrungen mit bzw. durch den Avatar auf einen langen Zeitraum ausgelegt sind. Da diese Interaktion durch Phasen unterbrochen wird, in denen sich der Fahrer nicht im Fahrzeug befindet, wird eine Möglichkeit geschaffen, wie der virtuelle Gesprächspartner den Fahrer immer begleiten kann, auch wenn dieser das Fahrzeug verlassen hat.

Dabei hat der Fahrer die Möglichkeit, den aktuellen Gesprächsverlauf und die Gesprächsposition mit dem Avatarsystem auf ein insbesondere mobiles Gerät als erste Kommunikationseinrichtung zu übertragen, um den Dialog auch außerhalb des Fahrzeugs fortzuführen oder dort erst beginnen zu können. Die Übertragung von einer der Kommunikationseinrichtungen des Kommunikationssystems auf das andere bei einem örtlichen Wechsel des Fahrers bzw. des Nutzers kann dabei sowohl mit Hilfe eines drahtgebundenen Systems als auch drahtlos erfolgen. Die insbesondere als mobiles Kommunikationsgerät ausgebildete erste Kommunikationseinrichtung muss dabei nicht die gleichen Eigenschaften wie die technische Infrastruktur der Kommunikationseinrichtung im Fahrzeug aufweisen.

Die erste Kommunikationseinrichtung kann eine Eingabe über eine virtuelle oder reelle Tastatur und/oder über Sprache und/oder Gestik umfassen.

Besonders bevorzugt erweist es sich, wenn beide Kommunikationseinrichtungen des Kommunikationssystems sowohl zur Verarbeitung von akustischen Signalen, insbesondere empfangenen Sprachsignalen, als auch zum Erzeugen von derartigen akustischen Signalen, insbesondere Sprachsignalen, ausgebildet sind.

Zusätzlich kann auch vorgesehen sein, dass die Eingabe über Mimik oder andere Bedienelemente bei den Kommunikationseinrichtungen erfolgen kann. Ebenso kann vorgesehen sein, dass die Antwort einer Kommunikationseinrichtung, insbesondere des Avatarsystems per Text und/oder in visueller Form und/oder in akustischer Form erfolgen kann.

Vorzugsweise ist eine Information beispielsweise eine Bedienungsanleitung des Fahrzeugs oder eine Komponente davon und/oder eine fahrzeugunabhängige Nachricht oder Mitteilung. In diesem Zusammenhang können selbstverständlich auch Texte und Berichte aus Zeitungen oder Büchern entsprechend angezeigt und vom Nutzer aufgenommen oder gelernt werden. Darüber hinaus können auch relativ kurze Informationsdarstellungen, wie beispielsweise Börsenkurse, Ergebnisdienste von Sportveranstaltungen oder dergleichen entsprechend dargeboten werden. Auch diese Darstellung von Informationen ist lediglich beispielhaft und kann in vielfältiger Weise ergänzt oder anderweitig ausgestaltet sein.

Als erreichter Zustand der Informationsvermittlung wird insbesondere ein Grad verstanden, wie weit man mit dem Studium der Gesamtheit zu einem Themenkomplex vorhandene Informationen bereits fortgeschritten ist. Wurden alle zu einem derartigen Thema vorhandenen und darzustellenden Informationen bereits angezeigt und vom Nutzer vorzugsweise auch erkannt, so ist der Endzustand der Informationsvermittlung zu diesem Thema erreicht.

Besonders vorteilhaft erweist sich das Kommunikationssystem somit dann, wenn ein Nutzer die Kommunikation mit einer der Kommunikationseinrichtungen beginnt und bei einem von ihm gewünschten Beenden dieser Kommunikation mit der zunächst gewählten Kommunikationseinrichtung der Endzustand der Informationsübermittlung und Informationsvermittlung noch nicht erreicht ist. Da dann zu einem späteren nachfolgenden Zeitpunkt üblicherweise die Kommunikation fortgesetzt wird und dies der Nutzer mit der anderen Kommunikationseinrichtung vollzieht, kann die Kommunikation beispielsweise dann mit der anderen Kommunikationseinrichtung beendet werden, wenn dann der Endzustand der Informationsvermittlung erreicht werden kann.

Vorzugsweise ist die Informationsauswahl und/oder die Abfolge der Informationsdarstellung und/oder die Art der Informationserläuterung abhängig von den durch den Nutzer eingegebenen akustischen Signalen, insbesondere Sprachsignalen. Unter der Informationsauswahl wird beispielsweise verstanden, zu welchem Thema Informationen dargeboten werden sollen. Unter einer Informationsdarstellung wird insbesondere verstanden, in welcher Reihenfolge die zu einem Thema vorhandenen Informationen präsentiert werden. Auch kann darunter verstanden werden, inwieweit lediglich eine Darstellung in Textform oder zusätzlich oder anstatt dazu anhand von graphischen bildhaften Darstellungen dies erfolgt. Unter einer Informationserläuterung wird demgegenüber verstanden, inwieweit die zu einem Thema vorhandenen Informationen kurz gefasst oder jedoch in ausführlichere Form angegeben werden. Insbesondere kann in diesem Zusammenhang auch vorgesehen sein, dass beispielsweise bei dem Vorhandensein eines virtuellen Wesens dessen Persönlichkeitsbild veränderbar ist. Dies bedeutet, dass beispielsweise die Art und Weise wie sich dieses virtuelle Wesen auf der Anzeige bewegt, und/oder wie es die sprachliche Darbietung vollzieht und somit beispielsweise welche Laune es verkörpert, darunter verstanden wird.

Vorzugsweise ist ein spezifisches Benutzerprofil durch einen Nutzer selbst erzeugbar und kann in einer Kommunikationseinrichtung gespeichert sein. Insbesondere wird bei einem Übertragen des erreichten Zustands der Informationsvermittlung auch das Benutzerprofil auf die andere Kommunikationseinrichtung mitübertragen. Dadurch kann in besonders bevorzugter Weise ermöglicht werden, dass alle vom Benutzer gewünschten und vorab definierten Einstellungen an einer Kommunikationseinrichtung auch bei der Weiterführung der Kommunikation mit der anderen Kommunikationseinrichtung insbesondere automatisch zugegen sind. In diesem Zusammenhang kann vorgesehen sein, dass durch die Übertragung dieser Automatismus bereits gegeben ist. Es kann jedoch auch vorgesehen sein, dass beispielsweise durch Betätigen eines Bedienelements an einer Kommunikationseinrichtung dieses Benutzerprofil dann automatisch geladen wird. In diesem Zusammenhang kann die Flexibilität im Hinblick auf die Benutzerfreundlichkeit nochmals erhöht werden, da der Benutzer selbst entscheiden kann, wann und ob er die einmal definierten Benutzereinstellungen verwenden will oder gerade nicht.

Vorzugsweise ist die Übertragung der einen erreichten Zustand der Informationsvermittlung charakterisierenden Daten von einer Kommunikationseinrichtung zu einer anderen in Echtzeit durchgeführt. Dies bedeutet vorzugsweise, dass dann, wenn eine Kommunikation zwischen dem Nutzer und einer Kommunikationseinrichtung stattfindet, auch die zumindest eine weitere Kommunikationseinrichtung, welche zum Kommunikationssystem gehört, vorwährend aktualisiert mit den Daten versorgt wird. Hier erfolgt somit eine automatische Aktualisierung und eine permanente Synchronisation der Kommunikationseinrichtung mit den entsprechenden Daten.

Es kann auch vorgesehen sein, dass die Übertragung der einen erreichten Zustand der Informationsvermittlung charakterisierenden Daten abhängig von einem spezifischen Betriebszustand des Fahrzeugs einleitbar ist, insbesondere automatisch einleitbar ist. So kann beispielsweise vorgesehen sein, dass dann ein Nutzer im Fahrzeug sitzt und die Kommunikation mit der im Fahrzeug angeordneten zweiten Kommunikationseinrichtung beendet, beispielsweise beim Abstellen des Motors und/oder beim Signal "Zündung aus" und/oder beim Öffnen der Fahrzeugtür und/oder beim Verschließen des Fahrzeugs nach dem Verlassen und die Übertragung automatisch durchgeführt wird. Auch hier sind die eben genannten spezifischen Betriebszustände des Fahrzeugs lediglich beispielhaft und es können vielfältige andere derartige Betriebszustände vorgesehen sein, von denen abhängig das Übertragen dieser charakterisierenden Daten erfolgen kann.

Vorzugsweise ist die Übertragung der einen erreichten Zustand der Informationsvermittlung charakterisierenden Daten auch durch einen Nutzer einleitbar. In diesem Zusammenhang kann diese benutzerdefinierte Einleitung durch Betätigen eines Bedienelements und/oder durch ein Sprachsignal oder dergleichen erfolgen.

Vorzugsweise werden zusätzlich zu den Daten über den erreichten Zustand der Informationsvermittlung auch vorgegebene Regeln für einen zwischen dem Nutzer und einer Kommunikationseinrichtung betreffend zumindest die Sprachgrammatik und/oder die Eingabe-/Ausgabe-Szenarien ablaufenden Dialog übertragen. Es wird somit auch das für die Kommunikation im Kommunikationssystem wesentliche Dialogwissen automatisch mitübertragen. Insbesondere kann vorgesehen sein, dass vorgegebene und vorab definierte Regeln für die Durchführung eines Dialogs zwischen einem Nutzer und einer Kommunikationseinrichtung bedarfsabhängig aktualisiert werden. Auch dies kann übertragen werden, so dass alle Kommunikationseinrichtungen stets auf dem aktuellen Stand gehalten werden können. Der Kern der Übertragung auf eine Kommunikationseinrichtung ist somit insbesondere das Dialogwissen des Systems, insbesondere des den Avatar umfassenden Systems und die aktuellen Zustände, also das "Bewusstsein" des Avatarsystems. Möglichkeiten zur Spracherkennung, Gestenerkennung oder Mimikerkennung sowie zur Sprachsynthese oder von graphischen Anzeigen können vom übertragenen Kern jedoch genutzt werden, sofern sie zur Verfügung stehen.

Vorzugsweise sind die Kommunikationseinrichtungen, insbesondere zeitlich versetzt und nicht gleichzeitig, von zumindest zwei verschiedenen Nutzern verwendbar. Der von einem Nutzer während einer Kommunikation während einer Kommunikationseinrichtung erreichte Zustand der Informationsvermittlung kann vorzugsweise nutzeridentifizierend abgespeichert werden und bei einer Fortführung der Kommunikation dieses Nutzers mit der anderen Kommunikationseinrichtung werden abhängig von einer Nutzeridentifikation mit zugeordneten und abgespeicherten und auf die andere Kommunikationseinrichtung übertragenen Daten auf dieser anderen Kommunikationseinrichtung bereitgestellt. Wenn mehrere Benutzer in der Übertragung ihres Gesprächszustands auf andere Geräte, insbesondere außerhalb des Fahrzeugs, vornehmen, ist eine Identifikation der entsprechenden Benutzer vorteilhaft. Zudem ist vorzugsweise bei einem Synchronisationsvorgang sichergestellt, dass Gesprächsfortführungen, die parallel auf mehreren Geräten bzw. Kommunikationseinrichtungen vorgenommen wurden, für einen Benutzer aufeinander abgeglichen werden, um einen konsistenten Zustand des Dialogkerns sicherzustellen.

Neben einer erhöhten Sicherheit kann dadurch auch die multipersonelle Verwendung problemlos ermöglicht werden.

Auch wenn verschiedenste Nutzer unterschiedlichste Zustände von Informationsvermittlungen über unterschiedlichste Informationen erreicht haben, kann dies problemlos festgehalten werden und bedarfsabhängig wieder an den entsprechenden individuellen Stellen fortgeführt werden.

Vorzugsweise werden die Daten über einen erreichten Zustand einer Informationsvermittlung von der ersten Kommunikationseinrichtung zu einer weiteren fahrzeugexternen Kommunikationseinrichtung übertragen. Somit kann über die Übertragung dieses Kerns und somit des Dialogwissens auf ein insbesondere mobiles Gerät auch eine Übertragung von diesem mobilen Gerät auf ein weiteres fahrzeugexternes, stationäres Gerät erfolgen, welches beispielsweise ein stationärer Computer oder dergleichen sein kann. Dies ermöglicht die Fortführung der Unterhaltung oder die Fortsetzung einer interaktiven Lerneinheit auf dem in der eigenen Wohnung aufgestellten PC (Personal Computer). Dabei werden bei jeder Übertragung der aktuelle Zustand einschließlich der Gesprächsposition und der bisher besprochene Kontext sowie Benutzereinstellungen vorzugsweise übergeben.

Die Änderungen am PC können dabei wiederum mit dem mobilen Gerät abgeglichen werden und vom mobilen Gerät direkt vom PC wieder zurück in das Fahrzeug und somit auf die zweite Kommunikationseinrichtung übertragen werden. Die Gesprächsführung muss nicht auf einem anderen stationären Gerät erfolgen, sondern kann auch auf dem mobilen Gerät erfolgen. Dementsprechend kann der Gesprächszustand auch direkt vom mobilen Gerät wieder zurück ins Fahrzeug übertragen werden, ohne den Umweg über ein stationäres Gerät, insbesondere den PC. Generell steht das Konzept der Übertragbarkeit im Fokus, so dass auch ein Dialog auf diesem stationären fahrzeugexternen Gerät oder auf der ersten Kommunikationseinrichtung begonnen werden kann und dann auf ein anderes Gerät des Kommunikationssystems oder eine zentrale Einheit, wie beispielsweise einen Server, übertragen werden.

Das Kommunikationssystem kann zur drahtlosen Kommunikation ausgebildet sein und zwischen den Kommunikationseinrichtungen kann beispielsweise ein WLAN (Wireless Local Area Network) ausgebildet sein. Auch hier können selbstverständlich andere drahtlose Netze vorgesehen sein. Auch eine zumindest teilweise drahtgebundene Ausführung des Netzwerks kann vorgesehen sein.

Der Übertragungsmechanismus kann zudem im Umkreis des Fahrzeugs dazu benutzt werden, um eine Verbindung zur zentralen Verarbeitungseinheit im Fahrzeug herzustellen. So kann ein mobiles Gerät, insbesondere die erste Kommunikationseinrichtung, verwendet werden, um einen spezifisches Bedienelement im Fahrzeug, insbesondere den Knopf zur Spracheingabe zu ersetzen, und dadurch auch aus der Ferne ein Gespräch mit dem System im Fahrzeug, und insbesondere dem dargestellten Avatar, durchführen zu können.

Es kann in diesem Zusammenhang vorgesehen sein, dass die gesamte Datenverarbeitung durch die im Fahrzeug angeordnete zweite Kommunikationseinrichtung durchgeführt wird und die insbesondere mobile erste Kommunikationseinrichtung keine derartige Datenverarbeitung im Hinblick auf Profilerstellung, Datengenerierung und dergleichen durchführt.

Bei einem erfindungsgemäßen Verfahren zum Kommunizieren zwischen Kommunikationseinrichtungen und zumindest einem Nutzer eines Kommunikationssystems, welche eine erste Kommunikationseinrichtung eine separat dazu ausgebildete und in einem Fahrzeug angeordnete zweite Kommunikationseinrichtung umfasst, werden zur Kommunikation mit einem Nutzer zumindest vom Nutzer akustische Signale an eine Kommunikationseinrichtung erzeugt. Informationen bei einer Kommunikation werden auf einer zumindest bei einer Kommunikationseinrichtung ausgebildeten Anzeigeeinheit angezeigt. Ein bei einer Kommunikation zwischen dem Nutzer und einer der Kommunikationseinrichtung erreichter und insbesondere von einem Endzustand einer zu übermittelten Information unterschiedlicher Zustand der Informationsvermittlung wird auf die andere Kommunikationseinrichtung übertragen und eine weitere Kommunikation zwischen dem Nutzer und der anderen Kommunikationseinrichtung kann bei dem erreichten Zustand der Informationsvermittlung fortgesetzt werden.

Vorteilhafte Ausgestaltungen des erfindungsgemäßen Kommunikationssystems sind als vorteilhafte Ausgestaltungen des erfindungsgemäßen Verfahrens anzusehen.

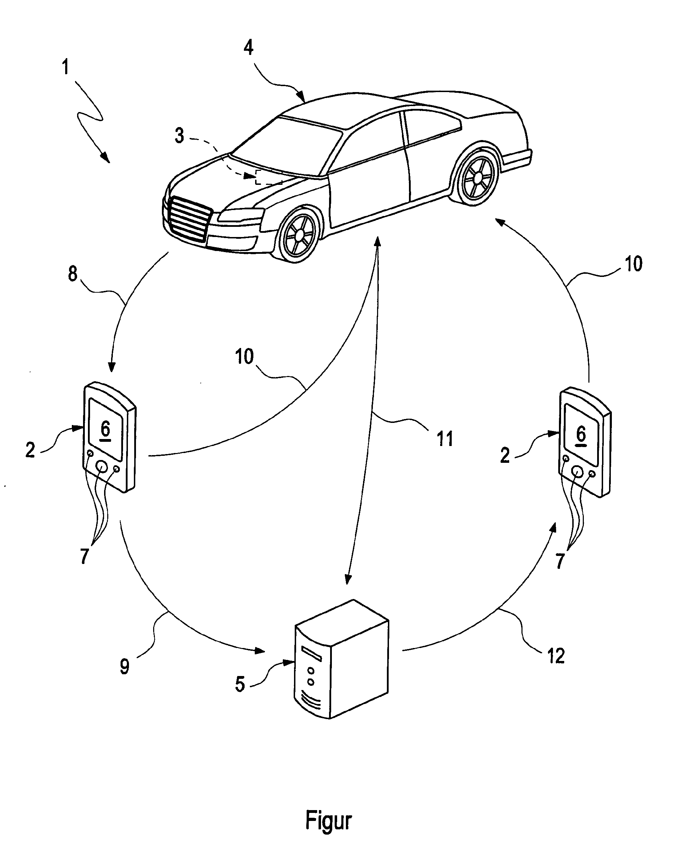

Ein Ausführungsbeispiel der Erfindung wird nachfolgend anhand einer schematischen Zeichnung näher erläutert. Die einzige Figur zeigt ein Ausführungsbeispiel eines erfindungsgemäßen Kommunikationssystems.

Das Kommunikationssystem 1 umfasst eine erste Kommunikationseinrichtung, welche im Ausführungsbeispiel als mobiles Endgerät 2 ausgebildet ist und als tragbares Mobiltelefon dient. Darüber hinaus umfasst das Kommunikationssystem 1 eine zweite Kommunikationseinrichtung 3, welche in einem Fahrzeug 4 ortsfest angeordnet ist. Die zweite Kommunikationseinrichtung 3 kann ein Infotainmentsystem sein, welches neben einem Navigationssystem beispielsweise auch ein System zur Darstellung von Audio- und/oder Videoinformationen umfasst. Diese zweite Kommunikationseinrichtung 3 umfasst eine nicht dargestellte Anzeigeeinheit, auf welcher Informationen bildhaft und/oder in Textform dargestellt werden können. Darüber hinaus ist die zweite Kommunikationseinrichtung 3 zur Verarbeitung von Sprachsignalen und zur Ausgabe von Informationen durch Sprachsignale ausgebildet.

Die zweite Kommunikationseinrichtung 3 kann somit mit einem Nutzer, beispielsweise in Form eines Fahrers, durch Sprache kommunizieren.

Entsprechendes gilt auch für die erste Kommunikationseinrichtung, welche ebenfalls zum Empfang und Verarbeitung von Sprachsignalen ausgebildet ist und zur Kommunikation durch Sprachsignale mit einem Nutzer konzipiert ist.

Das Kommunikationssystem 1 umfasst darüber hinaus neben der ersten fahrzeugexternen Kommunikationseinrichtung in Form des mobilen Endgeräts 2 eine weitere fahrzeugexterne Kommunikationseinrichtung, welche als stationärer Computer 5 ausgebildet ist und beispielsweise in einer Wohnung des Fahrzeuginhabers und des Inhabers des tragbaren mobilen Endgeräts 2 aufgestellt ist.

Das erwähnte mobile Endgerät 2 umfasst eine Anzeigeeinheit 6 und Bedienelemente 7. Entsprechend umfasst auch der stationäre Computer 5 eine nicht dargestellte Anzeigeeinheit sowie eine Eingabeeinrichtung, welche zur Eingabe über Sprache, über Tasten, etc. ausgebildet ist.

Im Ausführungsbeispiel ist vorgesehen, dass die Kommunikation zwischen der im Fahrzeug 4 angeordneten Kommunikationseinrichtung 3, dem mobilen Endgerät 2 und dem stationären Computer 5 drahtlos erfolgt. Dazu sind drahtlose Verbindungen 8, 9, 10, 11, 12 ausgebildet, welche ein Netzwerk bilden.

Befindet sich nunmehr beispielsweise der Fahrer des Fahrzeugs 4 im Fahrzeug und kommuniziert mit der zweiten Kommunikationseinrichtung 3 über Sprachsignale, so kann beispielsweise vorgesehen sein, dass sich der Fahrer über Informationen betreffend die Bedienungsanleitung einer Komponente des Fahrzeugs interessiert und die Informationen dargestellt haben möchte. Dies ist im Ausführungsbeispiel dadurch vorgesehen, dass auf der Anzeigeeinheit der Kommunikationseinrichtung 3 eine bildhafte Darstellung der zu erläuterten Komponenten befolgt und darüber hinaus ein virtuelles Wesen, ein nicht dargestellter Avatar, gezeigt wird. Mittels dieses Avatars wird die Informationsdarstellung unterstützt und eine Unterstützung der Erläuterung der Informationen auf der Anzeigeeinheit durchgeführt. Vorzugsweise ist die Bewegung und Darstellung des Avatars an die Informationspräsentation geknüpft, so dass ein dynamisches Anzeigen dahingehend erfolgt, dass der Avatar auf die jeweils zu erläuterten entsprechenden Positionen zeigt und gegebenenfalls die Sprachsignale beispielsweise auch anhand von Sprechblasen unterstützend dargestellt werden.

Beginnt nun die Kommunikation zwischen dem Nutzer und der im Fahrzeug 4 angeordneten Kommunikationseinrichtung 3 bezüglich einer derartigen Erläuterung der Bedienungsanleitung erfolgt eine Darstellung der Informationen zu diesem Thema betreffend die Erläuterung der Komponente des Fahrzeugs 4. Im zeitlichen Fortgang der Kommunikation werden somit fortschreitende Zustände der Informationsvermittlung zu diesem Thema erreicht. Hat beispielsweise der Fahrer dann seine Fahrt beendet und möchte aus dem Fahrzeug aussteigen, obwohl die Kommunikation im Hinblick auf die vollständige Informationsübermittlung zu dem gewählten Thema noch nicht abgeschlossen ist, so kann diese Kommunikation an dem erreichten Punkt und somit an dem erreichten Zustand der Informationsvermittlung unterbrochen werden. Dieser erreichte Zustand der Informationsvermittlung kann dann beispielsweise anhand spezifischer Betriebszustände des Fahrzeugs 4 erkannt und abgespeichert werden. Beispielsweise kann dies dadurch erkannt werden, dass der Fahrer die Zündung ausschaltet. Auch andere Zustände des Fahrzeugs 4 können diesbezüglich herangezogen werden, um zu erkennen, dass die Kommunikation zwischen dem Fahrzeugnutzer und der zweiten Kommunikationseinrichtung 3 beendet werden soll.

In diesem Zusammenhang kann vorgesehen sein, dass fortlaufend und automatisch das Erreichen verschiedener Zustände in die Informationsvermittlung über das drahtlose Netzwerk auf das mobile Endgerät 2 und/oder den stationären Computer 5 übertragen wird. Insbesondere ist vorgesehen, dass das drahtlose Netzwerk so ausgebildet ist, dass zunächst die Übertragung der Daten von der zweiten Kommunikationseinrichtung 3 auf das vorzugsweise mitgeführte mobile Endgerät 2 übertragen wird. Vorzugsweise ist somit das drahtlose Netzwerk in seiner Reichweite begrenzt.

Hat der Fahrer nun das Fahrzeug 4 verlassen und möchte die Kommunikation im Hinblick auf den Lernvorgang betreffend die Bedienungsanleitung zu der spezifischen Komponente fortführen, so kann er dies mit dem mobilen Endgerät 2 durchführen. Die Kommunikation wird dann fortgesetzt, indem der Fahrzeugnutzer im Weiteren mit dem mobilen Endgerät 2 kommuniziert. Aufgrund der automatischen Synchronisation im Hinblick auf die Daten ist in diesem mobilen Endgerät 2 ein Informationsstand erreicht, welcher genau dem entspricht, zudem die Kommunikation im Fahrzeug 4 zwischen dem Nutzer und der zweiten Kommunikationseinrichtung 3 beendet wurde. Nahtlos und ohne Redundanz und aber auch ohne Fehlen von Informationen kann dann die Kommunikation zwischen dem Nutzer und dem mobilen Endgerät 2 an der entsprechenden Stelle, welche den erreichten Zustand der Informationsvermittlung beim Beenden der Kommunikation zwischen dem Nutzer und der Kommunikationseinrichtung 3 erreicht wurde, fortgesetzt werden.

Alternativ dazu kann jedoch auch vorgesehen sein, dass der Fahrer nach dem Verlassen des Fahrzeugs 4 zu Hause angekommen ist und die Kommunikation zur weiteren Darstellung der Informationen zum Thema der Bedienung der spezifischen Komponente des Fahrzeugs 4 am heimischen stationären Computer 5 fortführen möchte. Auch dies ist problemlos möglich, da auch hier die entsprechenden Daten automatisch übertragen wurden und noch übertragen werden können und somit auch hier der bei der Kommunikation im Fahrzeug erreichte Zustand der Informationsvermittlung exakt vorliegt.

Darüber hinaus wird bei dieser Übertragung an das mobile Endgerät 2 und/oder an den stationären Computer 5 auch das vom Fahrzeugnutzer eingestellte spezifischer Benutzerprofil mitübertragen. Hier können ganz spezifische Kommunikationsvorgänge vorgesehen sein. Insbesondere wird bei dieser Übertragung auch das Dialogwissen mitübertragen, wodurch die Sprachgrammatik und/oder die Eingabe-Ausgabe-Szenarien des ablaufenden Dialogs mitübertragen werden. Die Fortführung der Kommunikation kann somit uneingeschränkt erfolgen, egal mit welchem Gerät der Nutzer letztendlich kommuniziert. Durch das Übertragen des Dialogwissens und auch des Benutzerprofils kann auch bei den mobilen Endgeräten 2 und dem stationären Computer 5 der hohe Wiedererkennungswert der Sprachsignale gewährleistet werden und die entsprechende Sprachkommunikation problemlos fortgeführt werden.

Wie aus der Darstellung in der Figur zu entnehmen ist, kann selbstverständlich auch eine Möglichkeit vorgesehen sein, dass nach der Übertragung der entsprechenden Daten von der im Fahrzeug 4 angeordneten Kommunikationseinrichtung 3 nach der dortigen Beendigung der Kommunikation auf das mobile Endgerät 2 die Kommunikation dort fortgesetzt wird. Darüber hinaus kann auch vorgesehen sein, dass dann diese Daten von dem mobilen Endgerät 2 auf den stationären Computer 5 übertragen werden. Von diesem stationären Computer 5 kann dann gegebenenfalls wieder die fortgeschrittene Kommunikation und der dabei erreichte Zustand der Informationsvermittlung wieder auf das mobile Endgerät 2 übertragen werden, von dem es dann wieder an die Kommunikationseinrichtung 3 im Fahrzeug übertragen werden kann. Selbstverständlich kann gemäß der Darstellung in der Figur jedoch auch eine direkte Übertragung von dem mobilen Endgerät 2 zum Fahrzeug 4 bzw. der dort angeordneten Kommunikationseinrichtung 3 erfolgen. Ebenso kann dies auch von dem stationären Computer 5 hin zur Kommunikationseinrichtung 3 erfolgen.

Gemäß der obigen Erläuterung des Ausführungsbeispiels wurde die Kommunikation zwischen dem Nutzer und der Kommunikationseinrichtung 3 im Fahrzeug 4 begonnen und dann extern fortgeführt. Selbstverständlich kann jedoch auch vorgesehen sein, dass eine Kommunikation zwischen dem Nutzer und dem mobilen Endgerät 2 oder dem Nutzer und dem stationären Computer 5 beginnt und an einer spezifischen Stelle und somit an einem spezifischen Zustand der Informationsvermittlung beendet wird und diese Daten dann an die Kommunikationseinrichtung 3 im Fahrzeug 4 übertragen werden. Die Kommunikation kann dann im Fahrzeug 4 fortgeführt werden, wenn der Fahrzeugnutzer sich dann im Fahrzeug 4 befindet und beispielsweise dann auch fährt.

## Patentansprüche

1. Kommunikationssystem mit einer ersten Kommunikationseinrichtung (2, 5) und einer separat dazu ausgebildeten und in einem Fahrzeug (4) angeordneten zweiten Kommunikationseinrichtung (3), welche jeweils zur Kommunikation mit einem Nutzer ausgebildet sind und jeweils eine Anzeigeeinheit (6) aufweisen, auf welchen Informationen anzeigbar sind, wobei ein bei einer Kommunikation zwischen dem Nutzer und einer der Kommunikationseinrichtungen (2, 3, 5) erreichter Zustand der Informationsvermittlung auf die andere Kommunikationseinrichtung (2, 3, 5) übertragbar ist und eine weitere Kommunikation zwischen dem Nutzer und der anderen Kommunikationseinrichtung (2, 3, 5) bei dem erreichten Zustand der Informationsvermittlung fortsetzbar ist, **dadurch gekennzeichnet, dass** die Kommunikationseinrichtungen (2, 3, 5) jeweils zur Verarbeitung von vom Nutzer erzeugten Sprachsignalen ausgebildet sind und einen Avatar umfassen, welcher zur unterstützenden Darstellung und Erläuterung der Informationen auf der jeweiligen Anzeigeeinheit (6) anzeigbar ist, wobei bei dem Übertragen des Zustands der aktuelle Gesprächsverlauf und die Gesprächsposition mit dem Avatar durch einen Fahrer übertragen wird.

2. Kommunikationssystem nach Anspruch 1, bei welchem die erste Kommunikationseinrichtung (2, 5) ein tragbares Kommunikationsgerät ist.

3. Kommunikationssystem nach einem der vorhergehenden Ansprüche, bei welchem eine Information eine Bedienungsanleitung des Fahrzeugs (4) oder einer Komponente davon und/oder eine fahrzeugunabhängige Nachricht ist.

4. Kommunikationssystem nach einem der vorhergehenden Ansprüche, bei welchem die Informationsauswahl und/oder die Abfolge der Informationsdarstellung und/oder die Art der Informationserläuterung abhängig von den durch den Nutzer eingegebenen akustischen Signalen, insbesondere den Sprachsignalen, ist.

5. Kommunikationssystem nach einem der vorhergehenden Ansprüche, bei welchem ein spezifisches Benutzerprofil durch einen Nutzer erzeugbar ist und in einer Kommunikationseinrichtung (2, 3, 5) gespeichert ist und bei einem Übertragen des erreichten Zustands der Informationsvermittlung das Benutzerprofil mitübertragen wird.

6. Kommunikationssystem nach einem der vorhergehenden Ansprüche, bei welchem die Übertragung der einen erreichten Zustand der Informationsvermittlung charakterisierenden Daten in Echtzeit durchführbar ist.

7. Kommunikationssystem nach einem der vorhergehenden Ansprüche, bei welchem die Übertragung der einen erreichten Zustand der Informationsvermittlung charakterisierenden Daten abhängig von einem spezifischen Betriebszustand des Fahrzeugs (4) einleitbar ist.

8. Kommunikationssystem nach einem der vorhergehenden Ansprüche, bei welchem die Übertragung der einen erreichten Zustand der Informationsvermittlung charakterisierenden Daten durch einen Nutzer einleitbar ist.

9. Kommunikationssystem nach einem der vorhergehenden Ansprüche, bei welchem zusätzlich zu den Daten über den erreichten Zustand der Informationsvermittlung auch vorgegebene Regeln für einen zwischen dem Nutzer und einer Kommunikationseinrichtung (2, 3, 5) betreffend zumindest die Sprachgrammatik und/oder die Eingabe/Ausgabe-Szenarien ablaufenden Dialog übertragen werden.

10. Kommunikationssystem nach einem der vorhergehenden Ansprüche, bei welchem die Kommunikationseinrichtungen (2, 3, 5) von zumindest zwei verschiedenen Nutzern verwendbar sind und der von einem Nutzer während einer Kommunikation mit einer Kommunikationseinrichtung (2, 3, 5) erreichte Zustand der Informationsvermittlung nutzeridentifizierend abgespeichert wird und bei einer Fortführung der Kommunikation dieses Nutzers mit der anderen Kommunikationseinrichtung (2, 3, 5) abhängig von der Nutzeridentifikation die zugeordnete abgespeicherten und auf die andere Kommunikationseinrichtung (2, 3, 5) übertragenen Daten bereitgestellt werden.

11. Kommunikationssystem nach einem der vorhergehenden Ansprüche, bei welchem die Daten über einen erreichten Zustand einer Informationsvermittlung von der ersten Kommunikationseinrichtung (2, 5) zu einer weiteren fahrzeugexternen Kommunikationseinrichtung (2, 5) übertragbar sind.

12. Kommunikationssystem nach einem der vorhergehenden Ansprüche, bei welchen die Daten über ein drahtloses Netz (8 bis 12) übertragen werden.

13. Kommunikationssystem nach einem der vorhergehenden Ansprüche, bei welchem die erste Kommunikationseinrichtung (2, 5) ein mobiles Endgerät oder ein Organizer oder ein Laptop ist.

14. Verfahren zum Kommunizieren zwischen Kommunikationseinrichtungen (2, 3, 5) und zumindest einem Nutzer eines Kommunikationssystems (1), welches eine erste Kommunikationseinrichtung (2, 5) und eine separat dazu ausgebildete und in einem Fahrzeug (4) angeordnete zweite Kommunikationseinrichtung (2, 5) umfasst, bei welchem Informationen auf jeweiligen Anzeigeeinheiten (6) der Kommunikationseinrichtungen (2, 3, 5) angezeigt werden, wobei ein bei einer Kommunikation zwischen dem Nutzer und einer der Kommunikationseinrichtungen (2, 3, 5) erreichter Zustand der Informationsvermittlung auf die andere Kommunikationseinrichtung (2, 3, 5) übertragen wird und eine weitere Kommunikation zwischen dem Nutzer und der anderen Kommunikationseinrichtung (2, 3, 5) bei dem erreichten Zustand der Informationsvermittlung fortgesetzt werden kann, **dadurch gekennzeichnet, dass** die Kommunikationseinrichtungen (2, 3, 5) jeweils von vom Nutzer erzeugte Sprachsignale verarbeiten und einen Avatar umfassen, welcher zur unterstützenden Darstellung und Erläuterung der Informationen auf der jeweiligen Anzeigeeinheit (6) angezeigt wird, wobei bei dem Übertragen des Zustands der aktuelle Gesprächsverlauf und die Gesprächsposition mit dem Avatar durch einen Fahrer übertragen wird.

## Claims

1. Communication system with a first communication device (2, 5) and a separate second communication device (3) arranged in a vehicle (4) which are each designed for communication with a user and each have a display unit (6) on which information can be shown, wherein an information provision status achieved during communication between the user and one of the communication devices (2, 3, 5) can be transmitted to the other communication device (2, 3, 5) and further communication between the user and the other communication device (2, 3, 5) can be continued with the achieved information provision status, **characterised in that** the communication devices (2, 3, 5) are each designed to process speech signals generated by the user and comprise an avatar which can be shown for the supporting display and explanation of the information on the relevant display unit (6), wherein on transmission of the status the current course of the conversation and position of the conversation are transmitted with the avatar by a driver.

2. Communication system according to claim 1 in which the first communication device (2, 5) is a portable communication device.

3. Communication system according to any one of the preceding claims in which information is an operating instruction for the vehicle (4) or a component thereof and/or a message independent of the vehicle.

4. Communication system according to any one of the preceding claims in which the selection of the information and/or the sequence of displaying the information and/or the manner of explaining the information is dependent on the acoustic signals inputted by the user, more particularly the speech signals.

5. Communication system according to any one of the preceding claims in which a specific user profile can be created by a user and stored in a communication device (2, 3, 5) and the user profile is jointly transmitted when transmitting the achieved information provision status.

6. Communication system according to any one of the preceding claims in which the transmission of the data characterising an achieved information provision status can be carried out in real time.

7. Communication system according to any one of the preceding claims in which the transmission of the data characterising the achieved information provision status can be initiated depending on a specific operational status of the vehicle (4).

8. Communication system according to any one of the preceding claims in which the transmission of the data characterising the achieved information provision status can be initiated by a user.

9. Communication system according to any one of the preceding claims in which in addition to the data of the achieved information provision status, predetermined rules for a dialogue being conducted between the user and a communication device (2, 3, 5) relating at least to linguistic grammar and/or the input/output scenarios are also transmitted.

10. Communication system according to any one of the preceding claims in which the communication devices (2, 3, 5) can be used by at least two different users and the information provision status achieved during a communication with one communication device (2, 3, 5) is stored in a user-identifying manner and on continuation of the communication of this user with the other communication device (2, 3, 5), depending on the user identification the assigned data which has been stored and transmitted to the other communication device (2, 3, 5) is provided.

11. Communication system according to any one of the preceding claims, in which the data of an achieved information provision status can be transmitted from the first communication device (2, 5) to a further communication device (2, 5) external of the vehicle.

12. Communication system according to any one of the preceding claims in which the data are transmitted via a wireless network (8 to 12).

13. Communication system according to any one of the preceding claims in which the first communication device (2, 5) is a mobile terminal device or an organiser or a laptop.

14. Method of communicating between communication devices (2, 3, 5) and at least one user of a communication system (1) comprising a first communication device (2, 5) and a separate second communication device (2, 5) arranged in a vehicle (4) in which information is shown on display units (6) of the communication devices (2, 3, 5), wherein a state of information provision achieved during communication between the user and one of the communication devices (2, 3, 5) can be transmitted to the other communication device (2, 3, 5) and further communication between the user and the other communication device (2, 3, 5) can be continued with the achieved information provision status, **characterised in that** the communication devices (2, 3, 5) are each designed to process speech signals generated by the user and comprise an avatar which can be shown for supporting display and explanation of the information on the relevant display unit (6), wherein on transmission of the status the current course of the conversation and position of the conversation are transmitted with the avatar by a driver.

## Revendications

1. Système de communication comprenant un premier dispositif de communication (2, 5) et un second dispositif de communication (3) formé séparément de celui-ci et aménagé dans un véhicule (4), qui sont conçus respectivement pour communiquer avec un utilisateur et présentent respectivement une unité d'affichage (6), sur laquelle des informations peuvent être affichées, dans lequel un état de la transmission d'informations atteint lors d'une communication entre l'utilisateur et l'un des dispositifs de communication (2, 3, 5) peut être transféré à l'autre dispositif de communication (2, 3, 5) et une autre communication entre l'utilisateur et l'autre dispositif de communication (2, 3, 5) peut être poursuivie dans l'état atteint de la transmission d'informations, **caractérisé en ce que** les dispositifs de communication (2, 3, 5) sont conçus respectivement pour traiter les signaux vocaux produits par l'utilisateur et comprennent un avatar qui peut être affiché sur l'unité d'affichage respective (6) pour renforcer la représentation et l'explication des informations, dans lequel, lors du transfert de l'état, le cours actuel de la conversation et la position de la conversation sont transférés avec l'avatar par un conducteur.

2. Système de communication selon la revendication 1, dans lequel le premier dispositif de communication (2, 5) est un appareil de communication portatif.

3. Système de communication selon l'une quelconque des revendications précédentes, dans lequel une information est une instruction de service du véhicule (4) ou d'un composant de celui-ci et/ou un message indépendant du véhicule.

4. Système de communication selon l'une quelconque des revendications précédentes, dans lequel la sélection des informations et/ou la suite de la représentation des informations et/ou le type de l'explication des informations est ou sont dépendants des signaux acoustiques saisis par l'utilisateur, en particulier des signaux vocaux.

5. Système de communication selon l'une quelconque des revendications précédentes, dans lequel un profil d'utilisateur spécifique peut être produit par un utilisateur et est mémorisé dans un dispositif de communication (2, 3, 5) et le profil d'utilisateur est transféré conjointement lors d'un transfert de l'état atteint de la transmission d'informations.

6. Système de communication selon l'une quelconque des revendications précédentes, dans lequel le transfert des données caractérisant l'état atteint de la transmission d'informations peut être réalisé en temps réel.

7. Système de communication selon l'une quelconque des revendications précédentes, dans lequel le transfert des données caractérisant l'état atteint de la transmission d'informations peut être induit en fonction d'un état de fonctionnement spécifique du véhicule (4).

8. Système de communication selon l'une quelconque des revendications précédentes, dans lequel le transfert des données caractérisant l'état atteint de transmission d'informations peut être induit par un utilisateur.

9. Système de communication selon l'une quelconque des revendications précédentes, dans lequel, en plus des données sur l'état atteint de la transmission d'informations, sont également transférées des règles prédéterminées pour un dialogue se déroulant entre l'utilisateur et un dispositif de communication (2, 3, 5) concernant au moins la grammaire vocale et/ou les scénarii d'entrée/sortie.

10. Système de communication selon l'une quelconque des revendications précédentes, dans lequel les dispositifs de communication (2, 3, 5) sont utilisables par au moins deux utilisateurs différents et l'état de la transmission d'informations atteint par un utilisateur au cours d'une communication avec un dispositif de communication (2,3, 5) est mémorisé en identifiant l'utilisateur et, lors d'une poursuite de la communication de cet utilisateur avec l'autre dispositif de communication (2, 3, 5), les données mémorisées affectées et transférées à l'autre dispositif de communication (2, 3, 5) sont élaborées en fonction de l'identification de l'utilisateur.

11. Système de communication selon l'une quelconque des revendications précédentes, dans lequel les données sur un état atteint d'une transmission d'informations peuvent être transférées du premier dispositif de communication (2, 5) à un autre dispositif de communication (2, 5) extérieur au véhicule.

12. Système de communication selon l'une quelconque des revendications précédentes, dans lequel les données sont transférées via un réseau sans fil (8 à 12).

13. Système de communication selon l'une quelconque des revendications précédentes, dans lequel le premier dispositif de communication (2, 5) est un poste terminal mobile ou un organiseur ou un ordinateur portatif.

14. Procédé de communication entre des dispositifs de communication (2, 3, 5) et au moins un utilisateur d'un système de communication (1), qui comprend un premier dispositif de communication (2, 5) et un second dispositif de communication (2, 5) conçu séparément de celui-ci et aménagé dans un véhicule (4), dans lequel des informations sont affichées sur des unités d'affichage respectives (6) des dispositifs de communication (2,3, 5), dans lequel un état de la communication de la transmission d'informations atteint lors d'une communication entre l'utilisateur et l'un des dispositifs de communication (2, 3, 5) est transféré à l'autre dispositif de communication (2, 3, 5) et une autre communication entre l'utilisateur et l'autre dispositif de communication (2, 3, 5) peut être poursuivie dans l'état atteint de la transmission d'informations, **caractérisé en ce que** les dispositifs de communication (2, 3, 5) traitent respectivement des signaux vocaux produits par l'utilisateur et comprennent un avatar, qui est affiché sur l'unité d'affichage respective (6) pour soutenir la représentation et l'explication des informations, dans lequel, lors du transfert de l'état, le cours actuel de la conversation et la position de la conversation sont transférés avec l'avatar par un conducteur.
